Europäisches Patentamt

(19) European Patent Office

Office européen des brevets

(11) Publication number : **0 452 279 A2**

## (12) EUROPEAN PATENT APPLICATION

(21) Application number : 91830126.8

(22) Date of filing : 28.03.91

(51) Int. Cl.⁵ : **A21B 1/06, A21B 1/40**

(30) Priority : 30.03.90 IT 342190

(43) Date of publication of application :
16.10.91 Bulletin 91/42

(84) Designated Contracting States :
AT BE CH DE DK ES FR GB GR LI LU NL SE

(71) Applicant : TAG FORNI S.r.l.
Via G. Verdi, 18
I-37060 Castel D'Azzano (Verona) (IT)

(72) Inventor : Zambotto, Paolo
Via S. Eurosia, 12
Trevenzuolo (Verona) (IT)
Inventor : Bertuetti, Davide
Via Canevali, 6
Brescia (IT)

(74) Representative : Dall'Olio, Giancarlo
INVENTION s.n.c. Via Arienti 26
I-40124 Bologna (IT)

(54) Oven to bake pastry products, bread and the like.

(57) The oven to bake pastry products, bread and the like comprises a base unit (1) provided with means (7) suited to generate an air flow and with means (8) to heat said air flow ; a plurality of modular baking units (2) suited to be assembled serially onto said base unit (1), separated from one another by means of relative insulating means (6), and respectively defining a baking chamber (3) located between a lower interspace (4) and an upper interspace (5) ; means (14) to convey said heated air flow to said lower interspace (4) and upper interspace (5) of said baking units (2) ; means (23) to choke the flow of heated air to be conveyed to said baking units (2) ; means (18) to intercept the air flow conveyed to the lower interspace (4) and upper interspace (5) of each baking unit (2).

EP 0 452 279 A2

FIG1

The present invention relates to the technical field concerning the baking of pastry products, pizza, bread, precooked foods, and the like.

Ovens of various types have been devised heretofore, to bake alimentary products, suitable both for handicraft and industrial production.

In particular, electric ovens are presently common, comprising a support on which two or more independent baking units are assembled, in a modular way, so as to achieve a higher flexibility, e.g. with the possibility to be adapted to subsequent increases in activity.

Each baking unit usually includes a baking chamber which is located between two interspaces, respectively lower and upper, making up the bedplate and the top of the same unit.

In the interspaces are housed suitable heating means, generally consisting of resistors. The baking units are suitably insulated from the outside, so as to avoid substantial losses of thermal energy.

Moreover, every baking unit provides for separate sources of heat, associated with suitable devices to regulate the power feeding to said resistors.

If, on the one hand, it is possible to regulate the temperature of every baking chamber independently from the other ones, on the other hand to achieve this purpose it is necessary to provide a number of heat sources, independent from each other, with all the drawbacks involved with respect to the regulation of power feed to the resistors defining said sources.

Other ovens are also known, which use a single source of heat, consisting of a single flow of gas heated by a conventional burner. Said hot gas flow is forced to pass through a closed circuit defined by the baking units.

Said ovens basically include a plurality of baking chambers separated by interspaces, in such a way that every intermediate interspace forms the bedplate of the chamber above and the top of the chamber below.

Such ovens do not allow to heat the various baking units separately, on the contrary these baking units are usually subject to uniform heating provided by the flow of heated gases crossing the interspaces which separate them. This is, obviously, a drawback when it is necessary to bake simultaneously different products, requiring different baking temperatures.

Furthermore, it happens sometimes that the oven needs to be used only partially, therefore heating it completely would be an obvious waste of thermal energy.

On the other hand, some ovens have been presented, wherein several baking units are gathered in blocks which can be heated separately by the flow of heated gases.

This is, however, only a partial solution of the problem mentioned above, since heat produced is anyway diffused inside each of said blocks through the interspaces which separate the different units. Furthermore, the requirement to have different heating temperatures is not met.

The object of this invention is to provide an oven to bake pastry products, bread and the like, operating with a single source of heat, allowing to heat separately the various baking units, so as to achieve an optimal thermal efficiency.

Another object of the present invention is to provide an oven made through a technical solution which is simple, certainly functional and reliable, of small size, as well as of versatile use according to the various products to bake.

The objects mentioned above are achieved through an oven to bake pastry products, bread and the like, substantially as described hereinafter and claimed in the appended claims.

The oven concerned by the invention is provided with a series of independent baking units which allow the simultaneous baking of different products, or they may be used partially without wasting energy. Thus the oven allows an optimal exploitation of the thermal energy produced by a single source of heat, with a correspondingly high thermal efficiency.

Moreover the oven described hereinafter has a modular structure, thus allowing the progressive addition of baking units in order to adapt it to the varying requirements of use.

The invention will be described further, by way of example, with reference to the accompanying drawings, wherein:

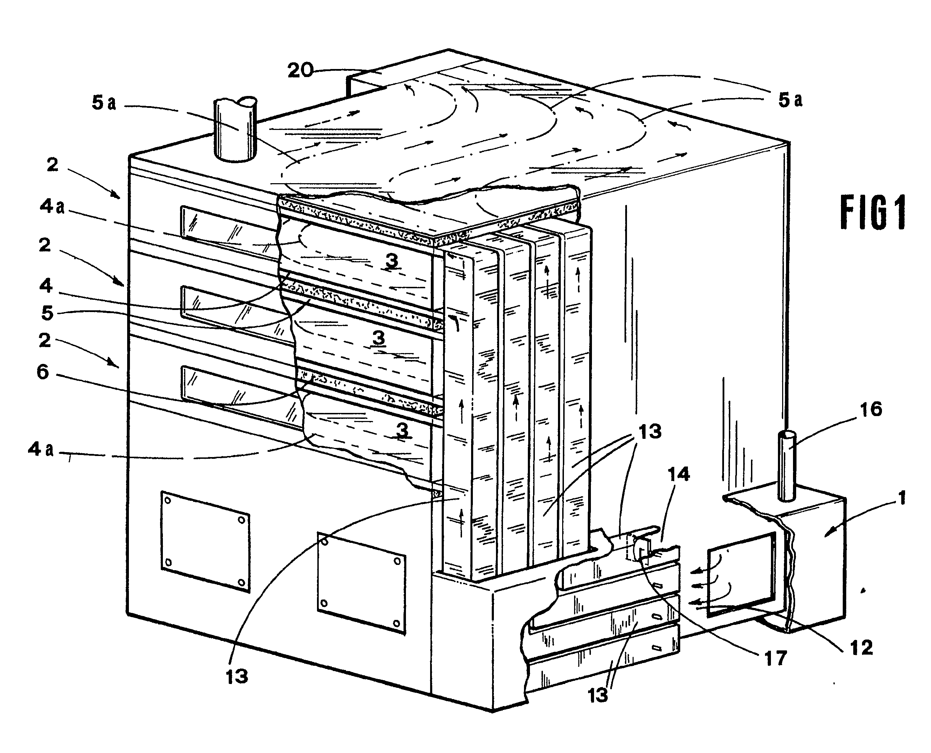

    – Fig.1 is a perspective view of the oven provided by the present invention, with some parts removed in order to outline some characterizing aspects better;

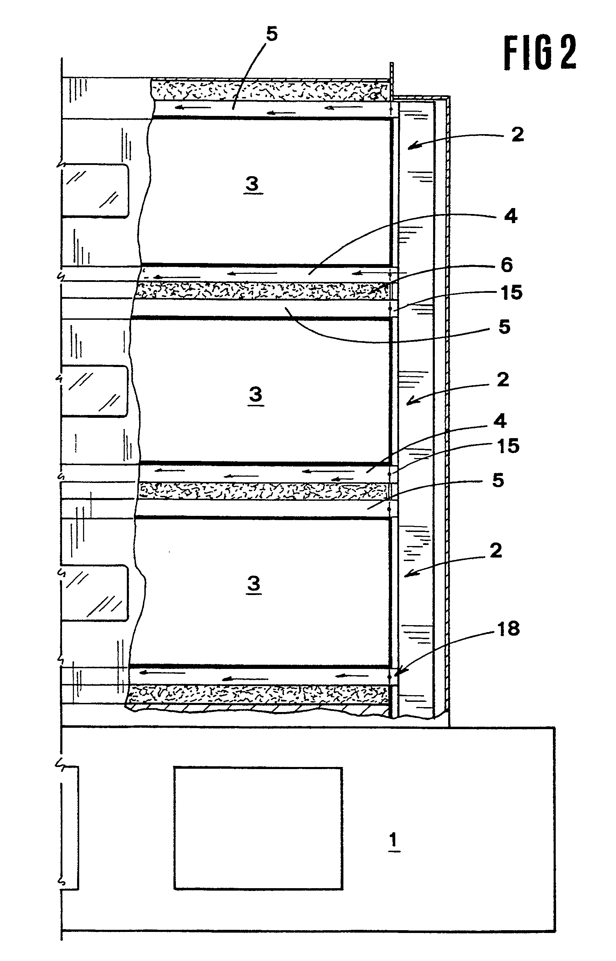

    – Fig. 2 is a front view, partially scrap and sectional, of said oven;

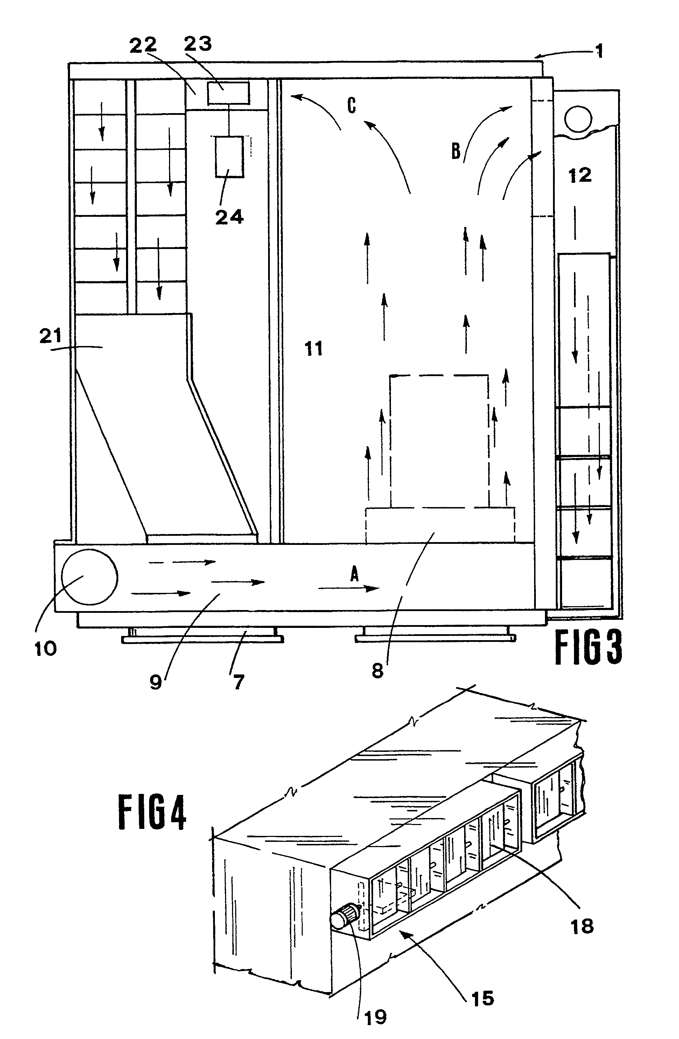

    – Fig. 3 is a horizontal section view of said base unit of the oven;

    – Fig. 4 is a front view of a baking unit, illustrating said air-flow intercepting means in detail.

Referring to said figures, the oven conforming to the invention comprises a base unit 1 and a plurality of modular baking units, respectively designated by the numeral 2, suited to be assembled one on top of the other onto said base unit. The baking units 2 respectively define a baking chamber 3 located between a lower interspace or bedplate 4 and an upper interspace or top 5; the baking units 2 are separated from each other by respective insulating elements 6.

The base unit 1 is provided with turbine means 7, suited to generate a flow of air, and with means 8 to heat said air flow, basically consisting of a conventional natural gas or diesel oil burner.

The air flow is caused to pass through a duct 9, as indicated by arrow A; the duct 9 is disposed in front of the base unit 1 and it is provided with a flue 10.

The air flow is led to lap the burner 8 inside a chamber 11 defined by the base unit 1.

The chamber 11 communicates at the rear end with a duct 12 beside said chamber 11. Inside the duct 12 is disposed a series of septa 13 suited to define corresponding channels 14 extending upwards and which are suited to be put into communication with the interspaces 4 and 5 of the baking units 2, through respective inlets 15; in practice, the channels 14 serve as conveyors of the heated air flow to said lower and upper interspaces of the baking units. Inside the interspaces 4,5 the channels 14 extend in corresponding ducts defined by respective vertical septa 4a, 5a.

Said ducts extend respectively according to an elbow path, one beside the other, and are differentiated according to the position of the relative inlet 15.

The duct 12 presents also a mouth 16 for a conventional safety-valve means; said valve means is suited to open in case of overpressure in order to prevent the risk of bursts.

The channels 14 are intercepted close to the inlet by gate-valve means 17 adjustable so as to allow to vary the flow. Said adjustment makes it possible to compensate the different development of the ducts respectively fed inside the interspaces 4,5.

Close to the inlets 15 are assembled respective gate-valve means 18 to intercept the air flow conveyed to every baking unit. The gate-valve means 18 of every interspace 4,5 of the baking units are operated by relative actuator means 19.

After having crossed the interspaces 4,5 the air flow is conveyed to relative exhaust channels 20 which have their opening in a position diametrically opposed to the hot-air conveying channels 14. The channels 20 have their outlets on the lower side, close to the base unit, into a duct 21 which leads the air flow back to the duct 9.

With the duct 21 is also communicating a channel 22 to choke the flow of heated air, which opens on the chamber 11 on the side opposite to the inlet of the duct 12. The channel 22 is provided with an adjustable gate-valve intercepting means 23, which is operated by a relative actuator means 24.

The turbine 7, located on the duct 9 upstream of the burner 8 in the sense of flow A, is suited to bring about the circulation of the heating air, by producing a vacuum in the chamber 11 of the base unit.

The air flow, heated by the burner 8, passes through the chamber 11 and enters the lateral duct 12 (arrow B), then it enters the channels 14 which feed the interspaces 4 and 5 of the baking units 2.

The gate valves 17 make it possible to adjust the flow to the channels 14 separately, so as to uniform the temperature of heating of the interspaces 4 and 5 of the various baking units 2.

Hot air is blown into the interspaces 4 and 5 of the baking units 2 through the inlets 15 respectively corresponding to the channels 14 and provided with relative gate-valve intercepting means 18. In the embodiment illustrated, the channels 14 and thus the inlets 15 of every interspace are four.

The intercepting means 18 may be rotated by the relative actuator means 19 in closing or opening position of the inlets 15, in order to allow or obstruct the hot air flow into the respective interspaces.

Obviously, it is possible to provide for said intercepting means being provided with adjustable opening.

The hot air flow passing through the lower interspace 4 and the upper interspace 5 of the baking units heats the baking chambers 3. The presence of the intercepting means 18 allows to heat only the units actually employed for baking, so as to avoid any waste of thermal energy. It should be pointed out that the baking units are insulated from each other by the insulating elements 6, thus any loss of energy is avoided.

It is also possible to carry out an intermittent heating of the single baking units, by employing the thermic inertia of the same units to carry on baking after having stopped the heating air flow. This brings about a further saving of energy.

In case of partial use of the baking units, part of the flow of hot air crossing the chamber 11 is deflected towards the channel 22 (arrow C), by opening the adjustable gate-valve intercepting means 23, and it is made to circulate again. This allows to keep the vacuum inside the chamber 11 constantly at the optimal value, by keeping constant the speed of the turbine 7 and the fire of the burner 8, for a simpler operation.

The adjustment of temperature values of the bedplate 4 and of the top 5 of every chamber 3 is carried out in a differentiated way, though having a single source of heat available (said air flow); thus the "distribution" of temperature inside the chamber 3 results to be optimal, with all the consequent advantages well known to the experts in the field.

## Claims

1) Oven to bake pastry products, bread and the like, **characterized in that** it comprises a base unit (1) provided with means (7) suited to generate a flow of air and with means (8) to heat said air flow; a plurality of modular baking units (2) suited to be assembled serially onto said base unit (1), separated from each other by relative insulating means (6), and defining respectively a baking chamber (3) located between a lower interspace (4) and an upper interspace (5); means (14) to convey said hot air flow to said lower interspace (4) and upper interspace (5) of said baking units (2); means (23) to choke the flow of heated air to be conveyed to said baking units (2); means (18) to intercept the air flow conveyed to the lower interspace 4 and upper interspace (5) of every baking unit (2).

2) Oven according to Claim 1, **characterized in that** said means (7) suited to generate a flow of air consist of a turbine disposed upstream of said heating means (8), in the sense of flow (A), said turbine being also suited to produce a vacuum in a chamber (11) located downstream of the same heating means, inside said base unit (1).

3) Oven according to Claim 1, **characterized in that** said base unit (1) comprises a duct (9), close to which there are disposed said means (7) suited to generate a flow of air and said heating means (8); a chamber (11) communicating at one end with said duct (9) and at the opposite end with a further duct (12) lateral to said chamber, inside said duct (12) being disposed a series of septa (13) suited to define corresponding channels which form said means 14 to convey the flow of heated air; a channel (22) bearing said means (23) to choke the flow of heated air, said channel (23) being suited to make said chamber (11) communicate with a duct (21) for the return of the air flow to said duct (9).

4) Oven according to Claim 1, **characterized in that** said means (14) conveying the flow of heated air comprise a plurality of channels which extend upwards from said base unit (1) and which are suited to be put into communication with said lower interspace (4) and upper interspace (5) of the baking units (2) through respective inlets (15), close to which there are disposed said intercepting means (18).

5) Oven according to Claim 4, **characterized in that** said channels (14) conveying the flow of heated air are intercepted close to the inlet by gate-valve means (17) suited to adjust the flow to the single channels.

6) Oven according to Claim 1, **characterized in that** said intercepting means (18) consist of gate-valve means assembled close to inlets (15) allowing the flow of heated air to enter said interspaces (4,5) of the baking units (2) and operated by relative actuator means (19).

7) Oven according to Claim 1, **characterized in that** said means (23) to choke the heated air flow comprise a gate-valve intercepting means which is adjustably operated by a relative actuator means (24) and which is disposed in a channel (22) communicating with a duct (21) for the return of the air flow.

FIG 1

EP 0 452 279 A2

FIG 2

FIG3

FIG4